# EUROPÄISCHE PATENTSCHRIFT

(11) **EP 1 355 099 B1**
(45) Veröffentlichungstag und Bekanntmachung des Hinweises auf die Patenterteilung: **27.07.2005**
(21) Anmeldenummer: 03008994.0
(22) Anmeldetag: 17.04.2003
(51) Int. Cl.: F16L 37/084, F16L 37/04

(54) **Lösbare Kupplung zur Verbindung zweier Schlauchenden einer aus wenigstens zwei Schläuchen zusammengesetzten, flüssigkeitsführenden Schlauchleitung**
Releasable coupling for joining to hose ends of a fluid conveying hose line consisting of at least two joined hoses
Raccord détachable pour joindre deux extrémités de tuyaux flexibles d'une conduite flexible transportant des liquides et composée d'au moins deux tuyaux flexibles joints

(30) Priorität: 18.04.2002 DE 10217197
(43) Veröffentlichungstag der Anmeldung: 22.10.2003
(73) Patentinhaber: Vola Plast Werner Hoppach KG, 34286 Spangenberg (DE)
(72) Erfinder: Hofmann, Jürgen, 34212 Melsungen (DE)
(74) Vertreter: WALTHER, WALTHER & HINZ Patentanwälte

(56) Entgegenhaltungen:
- DE-A- 19 653 257
- DE-U- 8 529 159
- FR-A- 1 249 628

## Beschreibung

Die vorliegende Erfindung betrifft eine lösbare Kupplung zur Verbindung zweier Schlauchenden einer aus wenigstens zwei Schläuchen zusammengesetzten, flüssigkeitsführenden Schlauchleitung gemäß dem Oberbegriff des Anspruches 1 und eine ähnliche lösbare Kupplung gemäß dem Oberbegriff des Anspruches 9. Solche Kupplungen sind, zum Beispiel, aus der DE-U-8529159 bekannt.

Aus der DE 196 53 257 A1 ist eine lösbare Kupplung zum Verbinden zweier Schlauchenden bekannt, bei der an einem ersten Schlauchende ein Steckelement und an einem zweiten Schlauchende eine das Steckelement aufnehmende, im Wesentlichen hohlzylindrisch ausgebildete Aufnahme angebracht ist. Das Steckelement ist pilzkopfartig ausgebildet und besitzt nahe seinem äußeren Ende einen ringförmig umlaufenden Führungsbund. Der Außendurchmesser dieses Führungsbundes ist dabei größer ausgebildet, als der Innendurchmesser der becherförmigen Aufnahme. Im hinteren Abschnitt der Aufnahme ist eine innenliegende, umlaufende Nut vorgesehen, in welche der Führungsbund eingreift, sobald das Steckelement vollständig in die Aufnahme eingeschoben ist. Dabei sind der radiale Rand der Nut und der radiale Rand des Führungsbundes derart korrespondierend zueinander ausgebildet, dass bei Druckbeaufschlagung des Schlauches hier eine dichtende Anlage entsteht.

Aus dem DE-U-8529159 ist ein Kunststoffrohr zur Sanierung von Rohrleitungen bekannt, bei dem benachbarte Rohrabschnitte über eine Kupplung verbunden sind. Dabei haben die Rohrenden im Bereich der Kupplung eine Verjüngung, so dass die Rohre ineinander einsteckbar sind. Im Bereich der Verjüngung wiederum ist an einem Rohrende eine Aussparung und am anderen Rohrende ein Vorsprung, so dass die Rohrenden an dieser Stelle ineinander einrasten und formschlüssig gehalten werden. Eine solche Kupplung hält die beiden Rohrteile in Längsrichtung, jedoch weist diese Kupplung eine nur geringe Kippsicherheit auf. Folglich kann die Kupplung sich beim Verkanten eines der beiden Rohrteile wieder lösen.

Aus der DE 196 18 381 A1 ist eine lösbare Kupplung bekannt, bei der eine hohlzylindrische Aufnahme ein pilzkopfartiges Steckelement aufnimmt. Dabei kommt der Pilzkopf in einer dafür vorgesehenen Aussparung im Innern der Aufnahme zur Anlage.

Derartige Kupplungen werden beispielsweise in Scheibenwischerleitung in Kraftfahrzeugen eingesetzt. Dabei führt ein Teil der Schlauchleitung vom Wasserbehälter bis zur Motorhaube und ein zweiter Teil führt von der Motorhaube zur Auslassdüse. Hierdurch ist es möglich, die einzelnen Komponenten bereits vorzumontieren, bevor die Motorhaube in die Karrosserie eingesetzt wird. Diese Vorgehensweise macht es erforderlich, dass die beiden Schläuche zu gegebener Zeit miteinander verbunden werden müssen, was durch die oben beschriebene Kupplung geschieht. Dabei sollte die Kupplung lösbar sein, damit die Motorhaube zu einem späteren Zeitpunkt gegebenenfalls wieder demontiert werden kann, ohne die Schlauchleitung zerstören zu müssen.

Damit die Kupplung auch unter Druck wasserdicht ist, muss das Steckelement stets koaxial zur Aufnahme ausgerichtet sein, da bei Verkippen des Steckelementes eine ausreichende Dichtung zwischen Führungsbund und Nut nicht mehr gewährleistet ist. Aus diesem Grunde ist die Aufnahme korrespondierend zum Hals des Steckelementes so lang gewählt, dass das Steckelement mit ausreichender Genauigkeit koaxial in der Aufnahme gehalten ist. Dies wiederum hat zur Folge, dass der Führungsbund über einen vergleichsweise großen Weg in die Aufnahme hineingetrieben wird, bevor er in die Nut gelangt. Dabei wird der im Außendurchmesser größere Führungsbund durch den im Innendurchmesser kleineren Hohlzylinder der Aufnahme gedrückt, wobei sich die Aufnahme auf Grund des elastischen Kunststoffes ein wenig weitet. Es versteht sich, dass der Werker bei einem derartigen Zusammenfügen der Kupplung sehr hohe Kräfte aufwenden muss, was bei der in der Automobilindustrie üblichen Fließbandproduktion schnell zu unangenehmen Ermüdungserscheinungen führt.

Außerdem besteht die Gefahr, dass die Aufnahme auf Grund der zwangsläufig durchgeführten Weitung an ihrer Nahtstelle aufplatzen kann, so dass die gesamte Kupplung, und gegebenenfalls der entsprechende Schlauch der Schlauchleitung, ausgetauscht werden muss. Letzteres führt zu erhöhten Material- und Montagekosten.

Davon ausgehend liegt der vorliegenden Erfindung die Aufgabe zu Grunde, eine lösbare Kupplung zu schaffen, die mit geringer Kraft zusammengefügt werden kann und die dennoch kostengünstig herstellbar ist.

Als technische Lösung dieser Aufgabe wird erfindungsgemäß eine Kupplung mit den Merkmalen des Anspruches 1 und eine Kupplung mit den Merkmalen des Anspruches 9 vorgeschlagen. Vorteilhafte Weiterbildungen der Kupplungen sind den jeweiligen Unteransprüchen zu entnehmen.

Eine nach dieser technischen Lehre ausgebildete Kupplung hat den Vorteil, dass das Einfügen des Steckelementes in die Aufnahme mit einem geringen Kraftaufwand möglich ist, so dass der damit betraute Werker am Fließband entlastet wird. Bei der Kupplung gemäß Anspruch 1 wird dies dadurch erreicht, dass der vergleichsweise lange Einführbereich größer als das Steckelement, respektive der Führungsbund, ausgebildet ist, so dass beim Einführen des Einsteckelementes in die Aufnahme im Bereich des Einführbereiches keine Kraft mehr erforderlich ist. Erst wenn der Führungsbund den Klemmbereich erreicht hat, wird die Aufnahme und/oder das Steckelement durch entsprechende Kraftaufwendung des Werkers derart verformt, dass das Steckelement an dem Klemmbereich vorbei bis tief in die Aufnahme geschoben werden kann. Da der Klemmbereich erfindungsgemäß aber deutlich kleiner als im Stand der Technik ausgebildet ist, ist die hier aufzuwendende Kraft ebenfalls deutlich kleiner. Dabei hat es sich als vorteilhaft erwiesen, den Einführbereich über mehr als die Hälfte der Aufnahme zu erstrecken, um die zu verbleibende Restkraft beim Einfügen des Steckelementes in die Aufnahme zu minimieren.

Es versteht sich, dass sowohl die Aufnahme, als auch das Steckelement lediglich in seinem elastischen Bereich deformiert wird, so dass sich beide Teile wieder in ihre ursprüngliche Form zurückbilden, sobald der Führungsbund den Klemmbereich wieder verlassen hat.

In einer vorteilhaften Weiterbildung ist im Übergang vom Einführbereich zum Klemmbereich eine definierte Fase ausgebildet. Dies hat den Vorteil, dass hierdurch der Führungsbund gleichmäßig an den Klemmbereich herangeführt wird, so dass eine langsam ansteigende Belastung des Werkers und des Materials erfolgt. Hierdurch ist eine genau definierte und sanfte Einführung des Steckelementes in die Aufnahme möglich, was im Ergebnis zu einer einfachen und leichten Montage führt.

In einer anderen, bevorzugten Ausführungsform ist am Steckelement ein Zentrierbund vorgesehen, an dem das freie Ende der Aufnahme passgenau anliegt, sobald die Kupplung bestimmungsgemäß zusammengesteckt ist. Durch diesen Zentrierbund wird ein axiales Verkippen des Steckelementes innerhalb der Aufnahme verhindert, so dass die durch das Steckelement hindurchströmende Flüssigkeit optimal durch die Kupplung hindurchströmen kann, und so dass eine optimale Abdichtung zwischen Steckelement und Aufnahme gewährleistet ist.

In einer weiteren, bevorzugten Ausführungsform ist der Führungsbund mittels Presspassung dichtend im Haltebereich gehalten. Dies hat den Vorteil, dass die Presspassung das Steckelement gegenüber der Aufnahme nicht nur dann zuverlässig abdichtet, wenn das Steckelement nicht koaxial zur Aufnahme angeordnet ist, sondern auch, wenn das Steckelement gegenüber der Längsachse verdreht ist. Auf Grund dieser vielseitigen Dichtung kann auf einen zylindrischen Einführbereich innerhalb der Aufnahme verzichtet werden mit der Folge, dass sowohl die Aufnahme, als auch das Steckelement entsprechend kürzer ausgebildet sein kann. Es versteht sich, dass der Klemmbereich dieser Aufnahme ebenso wie der Klemmbereich der zuvor genannten ersten Ausführungsform auf ein Minimum reduziert ist. Durch das Weglassen des Einführbereiches und das entsprechende Verkürzen der Aufnahme und des Steckelementes wird neben einer Materialeinsparung auch der Vorteil erzielt, dass die zum Einfügen des Steckelementes in die Aufnahme benötigte Kraft genauso auf ein Minimum reduziert ist, wie in der ersten Ausführungsform, da auch hier der Klemmbereich entsprechend kurz ausgebildet ist. Dabei hat es sich als vorteilhaft erwiesen, den Klemmbereich nicht länger als 2 mm, vorzugsweise nur 1 mm auszugestalten.

Nachdem bei beiden genannten Ausführungsformen der Kraftaufwand zum Einfügen des Steckelementes in die Aufnahme deutlich reduziert werden konnte, versteht es sich, dass auch der beim Demontieren notwendige Kraftaufwand ebenfalls auf ein Minimum reduziert ist.

Gemäß Anspruch 1 ist im Klemmbereich der Aufnahme außenseitig ein umlaufender Verstärkungsring vorgesehen. Dieser Verstärkungsring verhindert ein Aufplatzen der Bindenaht der Aufnahme beim Einfügen des Steckelementes. Um die damit verbundenen, zusätzlichen Fertigungskosten gering zu halten, wird dieser Verstärkungsring einstückig an die Aufnahme angeformt. Hierdurch kann die Aufnahme zusammen mit dem Verstärkungsring in einem einzigen Arbeitsschritt hergestellt werden, so dass neben dem erhöhten Materialaufwand keine zusätzlichen Fertigungskosten entstehen.

In einer ganz besonders bevorzugten Weiterbildung bewirkt der einstückig an der Aufnahme angeformte Verstärkungsring einen Schwindungseffekt. Das heißt, auf Grund der erhöhten Materialstärke an dieser Stelle schwindet die Aufnahme in diesem Bereich stärker, als in anderen Bereichen mit der Folge, dass auf Grund der erhöhten Schwindung der lichte Durchmesser im inneren der Aufnahme entsprechend geringer ausfällt. Folglich braucht bei der Konstruktion der Aufnahme der Klemmbereich lediglich so ausgelegt werden, dass der Führungsbund des Steckelementes gerade eben hindurchreicht und nach vollendeter Fertigung der Aufnahme ist dann der mit einer erhöhten Materialstärke versehen Klemmbereich kleiner als der Führungsbund des Steckelementes, so dass beim Einfügen des Steckelementes im Bereich des Klemmbereiches ein entsprechender Widerstand zu überwinden ist. Dies hat unter anderem den Vorteil, dass die Konstruktion der Aufnahme vereinfacht wird, da nunmehr keine Hinterschneidungen mehr erforderlich sind. Dies erleichtert die Fertigung insbesondere im Spritzgussverfahren erheblich. Ein weiterer Vorteil besteht darin, dass auf Grund der erhöhten Wandstärke in diesem Klemmbereich auch die Gefahr eines Aufplatzens der Bindenaht verringert wird, da der Verstärkungsring erhöhte Kräfte aufnehmen kann, ohne beschädigt zu werden.

Es hat sich als vorteilhaft erwiesen, die Wandstärke im Klemmbereich um 0,5 mm bis 3 mm, vorzugsweise um 1,5 mm zu erhöhen, da hierdurch bereits eine ausreichende Einschnürung des Innenquerschnitts und eine ausreichende Erhöhung der Festigkeit erreicht wird.

Weitere Vorteile der erfindungsgemäßen Kupplungen ergeben sich aus der beigefügten Zeichnung und den nachfolgend beschriebenen Ausführungsformen. Die erwähnten Ausführungsformen sind nicht als abschließende Aufzählung zu verstehen, sondern haben vielmehr beispielhaften Charakter. Es zeigen:
- Fig. 1: eine geschnitten dargestellte Seitenansicht einer ersten, erfindungsgemäßen Ausführungsform;
- Fig. 2: eine Detailvergrößerung gemäß Linie II in Fig. 1;;
- Fig. 3: eine geschnitten dargestellte Seitenansicht einer zweiten, erfindungsgemäßen Ausführungsform;
- Fig. 4: eine Detailvergrößerung gemäß Linie III in Fig. 3;
- Fig. 5: eine geschnittene dargestellte Seitenansicht einer dritten, erfindungsgemäßen Ausführungsform;
- Fig. 6: eine geschnittene dargestellte Seitenansicht einer vierten, erfindungsgemäßen Ausführungsform.

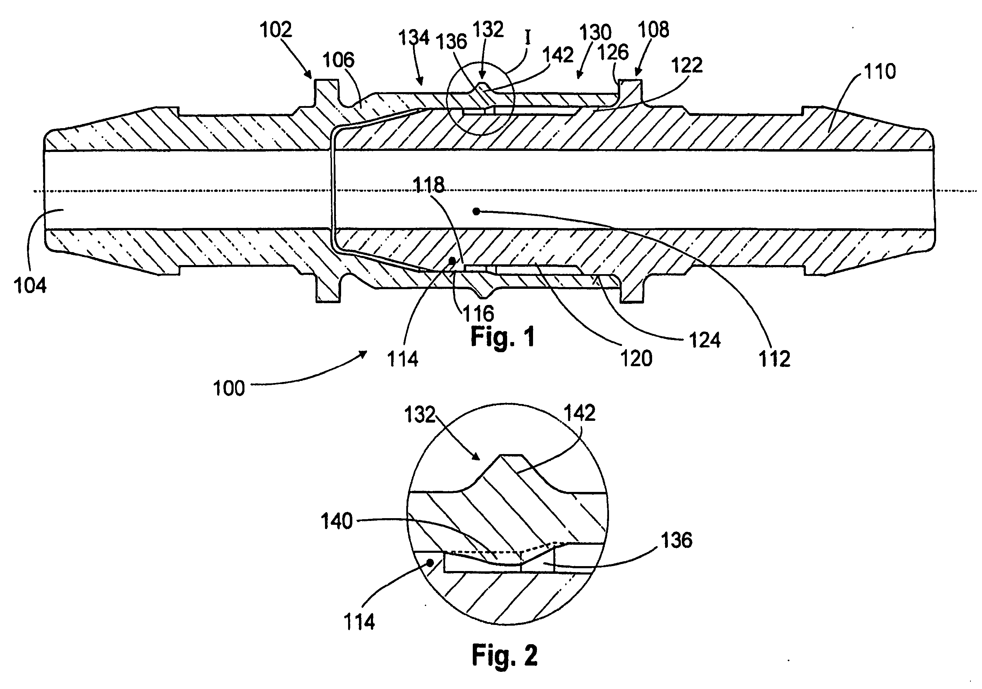

In den Figuren 1 und 2 ist eine erste Ausführungsform einer lösbaren Kupplung zur Verbindung zweier Schlauchenden dargestellt, wie sie beispielsweise bei Scheibenwischeranlagen im Kraftfahrzeugbereich eingesetzt werden. Dabei weist die eigentliche Schlauchleitung einen ersten, von einem Vorratsbehälter kommenden Schlauch und einen zweiten, zur Austrittsdüse führenden Schlauch auf. Dieser erste Schlauch ist in der Regel im Motorraum verlegt, während der zweite Schlauch an der Motorhaube befestigt ist. Die physikalische Trennung der Schläuche wird deswegen durchgeführt, damit die Düse zunächst an der Motorhaube befestigt und ausgerichtet werden kann, bevor die Motorhaube an das eigentliche Fahrzeug montiert wird. Abschließend werden dann die beiden Schläuche miteinander verbunden, wozu die hier in Rede stehende Kupplung 100 eingesetzt wird.

Diese Kupplung 100 umfasst einen an einem ersten Schlauchende anbringbaren Stecker 102 mit einem Schlauchadapter 104 und einer Aufnahme 106, sowie einen an einem zweiten Schlauchende anbringbaren Konnektor 108 mit einem Schlauchadapter 110 und einem Steckelement 112. Der Stecker 102 und der Konnektor 108 werden mit ihrem jeweiligen Schlauchadapter 104, 110 an dem jeweiligen Schlauchende befestigt (hier nicht näher dargestellt). Zum Verbinden der beiden Schlauchenden wird schließlich der Konnektor 108 mit seinem Steckelement 112 in die Aufnahme 106 des Steckers 102 eingesteckt und realisiert so eine druckdichte und lösbare Verbindung.

Das Steckelement 112 des Konnektors 108 weist an seinem freien Ende einen umlaufenden Führungsbund 114 auf, der eine pilzkopfartige Verbreiterung des Außendurchmessers des Steckelementes 112 darstellt. Dabei erfolgt die Querschnittsverbreiterung zunächst einmal vom freien Ende des Steckelementes 112 langsam und konisch ansteigend und geht dann über in eine parallel zur Längsachse ausgerichtete Führungsfläche 116. Am Ende der Führungsfläche 116 springt der Querschnitt stufenförmig zurück, so dass sich am rückwärtigen Führungsbund 114 eine radial ausgerichtete Stufe 118 bildet. Daran schließt sich ein sogenannter Hals 120 mit einem verkleinerten Durchmesser an. Dem Hals 120 nachfolgend ist ein Zentrierbund 122 mit einem wiederum vergrößerten Durchmesser ausgebildet, dessen Umfangsfläche als Anlage 124 fungiert. Als Abschluss des Steckelementes 112 ist ein radial abstehender Anschlag 126 ausgebildet, an dem die Aufnahme 106 des Steckers 102 zur Anlage kommt.

Die Aufnahme 106 des Steckers 102 ist im Wesentlichen hohlzylindrisch ausgebildet und umfasst drei wichtige Teilbereiche: den nahe einer Öffnung der Aufnahme 106 angeordneten Einführbereich 130, den sich daran anschließenden Klemmbereich 132 und den sich an den Klemmbereich 132 anschließenden Haltebereich 134. Der lichte Innendurchmesser des hohlzylindrischen Einführbereichs 130 ist dabei größer als der Außendurchmesser des Führungsbundes 114 und in etwa gleich dem Außendurchmesser des Zentrierbundes 122. Im Übergang vom Einführbereich 130 zum Klemmbereich 132 ist eine definierte Fase 136 ausgebildet, so dass sich der lichte Innendurchmesser der Aufnahme 106 im Klemmbereich 132 soweit verringert, dass der Innendurchmesser im Klemmbereich 132 kleiner als der Außendurchmesser des Führungsbundes 114 ist. Gleichzeitig ist jedoch die Aufnahme 106 im Klemmbereich 132 größer als der Hals 120 des Steckelementes 112 ausgebildet. Der Innendurchmesser der Aufnahme 106 ist im Haltebereich 134 so gewählt, dass der Führungsbund 114 im Haltebereich 134 mittels einer Presspassung gehalten ist. Hierbei liegt die Führungsfläche 116 bündig im Haltebereich 134 der Aufnahme 106 an. Im weiteren Verlauf ist die Aufnahme 106 konisch verjüngend ausgebildet, jedoch so dimensioniert, dass das Steckelement 112 darin aufgenommen werden kann.

Auf der Außenseite der Aufnahme 106 ist im Klemmbereich 132 eine Materialverdickung vorgesehen, welche als umlaufender Verstärkungsring 142 ausgebildet ist. Dieser Verstärkungsring 142 ist einstückig an der Aufnahme 106 angeformt und auch aus dem selben Material gefertigt. Dabei handelt es sich vorzugsweise um POM-C. Im Inneren der Aufnahme 106 ist am Übergang vom Einführbereich 130 in den Klemmbereich 132 ebenfalls eine definierte Fase 136 ausgebildet, da vom Einführbereich 130 zum Klemmbereich 132 und zum Haltebereich 134 hin eine Querschnittsverengung erfolgt. Der lichte Innendurchmesser des Klernmbundes 140 ist kleiner als der Außendurchmesser des Führungsbundes 114 des Steckelementes 112, so dass auch beim Zusammenfügen des Konnektors 108 und des Steckers 102 der Kupplung eine gewisse Kraft aufgewendet werden muss, um den Führungsbund 114 am Klemmbund 140 vorbeizuführen. Dieser Klemmbund 140 wird jedoch nicht konstruktiv erstellt, sondern durch Ausnutzung des Schwindungseffektes des Kunststoffes bei der Herstellung des Steckers 102. Es wird nachfolgend wie folgt erläutert:

Bei der Konstruktion des Steckers 102 wird der Klemmbereich 132 und der Haltebereich 134 so ausgelegt, dass beide den gleichen, lichten Innendurchmesser aufweisen. Dabei ist dieser Innendurchmesser so dimensioniert, dass zumindest im Haltebereich 134 eine Presspassung mit dem Führungsbund 114 des Steckelementes 112 erreicht wird. Des Weiteren ist im Klemmbereich 132 eine erhöhte Wandstärke des Kunststoffmaterials vorgesehen, beispielsweise durch Ausbilden eines Verstärkungsringes 142 auf der Außenseite der Aufnahme 106. Nachdem der Stecker 102 dann beispielsweise im Spritzgussverfahren hergestellt wurde, erfolgt beim Abkühlen des Steckers 102 ein gewisses Schwinden des Kunststoffes. Das heißt, beim Abkühlen verändert der Kunststoff in gewissem Umfange seine Außenkontur, wobei der Schwindungseffekt umso stärker ist, je größer die Wandstärke gewählt ist. Folglich tritt aufgrund der erhöhten Wandstärke im Klemmbereich 132 eine größere Schwindung auf, als im Haltebereich 134 und im Einführbereich 130. Dies hat zur Folge, dass der lichte Innendurchmesser im Klemmbereich 132 nach erfolgter Herstellung des Steckers 102 kleiner ist, als der lichte Durchmesser im Haltebereich 134, so dass sich hierdurch im Klemmbereich 132 ein Klemmbund 140 ausbildet.

Das Zusammenfügen von Stecker 102 und Konnektor 108 geschieht wie folgt: Zunächst einmal wird der Stecker 102 und der Konnektor 108 mit ihrem jeweiligen Schlauchadaptem 104, 110 an den jeweiligen Schlauchende befestigt. Anschließend werden der Stecker 102 und der Konnektor 108 koaxial ausgerichtet und der Konnektor 108 wird mit seinem Steckelement 112 in die Aufnahme 106 eingeführt. Dabei gelangt das Steckelement 112 zunächst in den Einführbereich 130 der Aufnahme 106 und wird ohne Kraftaufwand an den Klemmbereich 132 herangeführt. Dies ist deshalb möglich, da der Einführbereich 130 größer als das Steckelement 112 ausgebildet ist. Sobald das Steckelement 112 mit seinem Führungsbund 114 an der Fase 136 des Klemmbereiches ankommt, muss der Werker soviel Kraft aufwenden, dass eine elastische Verformung des Steckers 102 und/oder des Konnektors 108 erfolgt, so dass der lichte Durchmesser des Klemmbereiches 132 derart vergrößert wird und/oder so dass der Außendurchmesser des Führungsbundes 114 derart verkleinert, dass das Steckelement 112 am Klemmbund 140 vorbeigeführt werden kann. Sobald der Führungsbund 114 den Klemmbund 140 passiert hat, springt die Aufnahme 106 in ihren ursprünglichen Zustand zurück, was durch ein deutliches Geräusch dokumentiert wird. Nun sitzt das Steckelement 112 vollständig in der Aufnahme 106 und wird über die Führungsfläche 116 des Führungsbundes 114 mittels einer Presspassung im Haltebereich 134 der Aufnahme 106 des Steckers 102 gehalten. Gleichzeitig kommt ein Teil des Einführbereiches 130 an der Anlage 124 des Zentrierbundes 122 zur Anlage und die Stirnseite der Aufnahme 106 liegt am Anschlag 126 an.

Eine derart ausgebildete Kupplung gewährleistet eine zuverlässige Verbindung der beiden hier in Rede stehenden Schlauchenden, bei der auch ein Verkippen der einzelnen Teile verhindert wird. Die flüssigkeitsdichte Abdichtung erfolgt dabei durch die Presspassung zwischen Führungsbund 114 und Haltebereich 134, so dass auch bei einem Innendruck von bis zu 10 bar keine Flüssigkeit austreten kann.

Das Steckelement 112 ist an zwei unterschiedlichen Stellen in der Aufnahme 106 gehalten, und zwar einerseits im Bereich des Führungsbundes 114 und andererseits im Bereich des Zentrierbundes 122. Hierdurch wird eine koaxiale Fixierung des Steckelementes 112 gewährleistet, so dass ein Verkippen des Konnektors 108 gegenüber dem Stecker 102 verhindert wird. Diese koaxiale Fixierung bewirkt unter anderem eine optimale Strömung innerhalb der Kupplung 100, ohne dass am Übergang von Konnektor 108 zum Stecker 102 großartige Verwicklungen entstehen.

Durch den vergleichsweise schmalen Verstärkungsring 142 ist auch der Klemmbereich 132 vergleichsweise schmal ausgeführt, so dass beim Einführen des Steckelementes 112 nur wenig Kraft aufgewandt werden braucht, um den Führungsbund 114 am Klemmbund 140 vorbeizuführen. Ein weiterer Vorteil besteht darin, dass aufgrund der erhöhten Wandstärke im Klemmbereich 132 die Gefahr des Aufplatzens des Steckers 102 durch die elastische Querschnittsvergrößerung der Aufnahme 106 beim Einführen des Konnektors 108 auf ein Minimum verringert wird. Durch die erhöhte Wandstärke kann die hierdurch auftretende Belastung sehr viel einfacher aufgenommen werden. Ein weiterer Vorteil besteht darin, dass bei der Konstruktion des Steckers durch den gleichen Innendurchmesser im Haltebereich 134 und im Klemmbereich 132 keine Hinterschneidungen mehr auftreten, so dass die Fertigung des Steckers 102 deutlich vereinfacht wird.

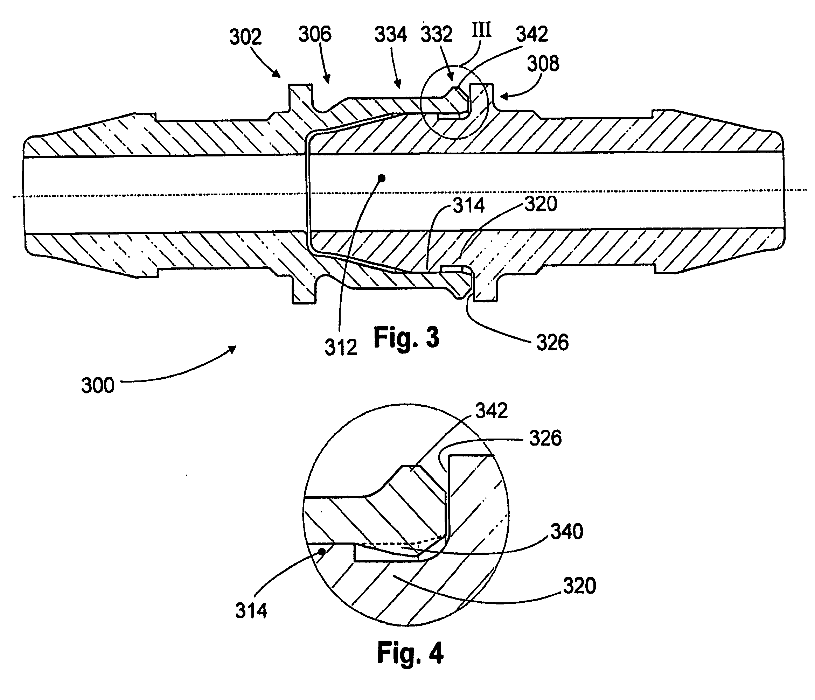

In den Figuren 3 und 4 ist eine zweite Ausführungsform einer erfindungsgemäßen Kupplung 300 dargestellt, die ebenfalls einen Stecker 302 und einen Konnektor 308 aufweist. Dieser Stecker 302 und dieser Konnektor 308 sind in großen Teilen identisch mit dem Stecker 102 und dem Konnektor 108 der ersten Ausführungsform gemäß den Figuren 1 und 2, außer dass in der zweiten Ausführungsform der Einführbereich der Aufnahme weggelassen wurde und dass der Hals des Steckelementes entsprechend gekürzt ist. Das heißt, das zuvor Genannte gilt mit Ausnahme des Einführbereiches auch für diese zweite Ausführungsform. Nachfolgend wird die zweite Ausführungsform gemäß den Figuren 3 und 4 näher beschrieben:

Das pilzkopfartige Steckelement 312 des Konnektors 308 weist zwischen einem Führungsbund 314 und einem Anschlag 326 einen Hals 320 auf. Dabei ist das Steckelement 312 genauso wie das Steckelement 112 der ersten Ausführungsform gemäß Figur 1 ausgebildet mit dem Unterschied, dass der Hals 320 deutlich kürzer ausgebildet ist, als der entsprechende Hals der anderen Ausführungsform und dass hier auf einen Zentrierbund verzichtet wurde.

Die Aufnahme 306 des Steckers 302 beginnt direkt mit dem Klemmbereich 332, auf den der Haltebereich 334 folgt. Das heißt, in der Aufnahme 306 wurde auf den Einführbereich gemäß der ersten Ausführungsform verzichtet. Im Übrigen ist die Aufnahme 306 so ausgebildet, wie die Aufnahme 106 der ersten Ausführungsform und weist im Klemmbereich 332 ebenfalls einen Verstärkungsring 342 auf.

Diese Kupplung 300 ist durch Weglassen des Einführbereiches bzw. Verkürzen des Halses kürzer ausgebildet und führt somit zu nicht unerheblichen Materialeinsparungen. Zwar fehlt dieser Ausführungsform durch das Weglassen des Einführbereiches und des Zentrierbundes eine Kippsicherung, jedoch hat dies keine Auswirkungen auf die Druck- und Flüssigkeitsdichtigkeit. Durch das Ausbilden einer Presspassung zwischen dem Führungsbund 314 und dem Haltebereich 334 wird eine ausreichende Druck- und Flüssigkeitsdichtigkeit erreicht. Selbst wenn der Konnektor 306 gegenüber dem Stecker 302 verkippt, bleibt aufgrund der Presspassung die Dichtigkeit gewährleistet, da auch im verkippten Zustand zwischen dem Führungsbund 314 und dem Haltebereich 334 eine entsprechende Presspassung vorliegt. Das heißt mit anderen Worten, dass auch nach Verkippen des Konnektors 308 der Führungsbund 314 umlaufend und unter Ausübung eines Druckes im Haltebereich 334 anliegt. An bestimmten Stellen wird durch das Verkippen sogar der im Rahmen der Presspassung ausgeübte Druck erhöht, da in diesen Teilbereichen der projizierte Durchmesser des Führungsbundes 314 durch das Verkippen vergrößert wird mit der Folge, dass in diesen Teilbereichen sogar eine erhöhte Dichtigkeit erreicht wird.

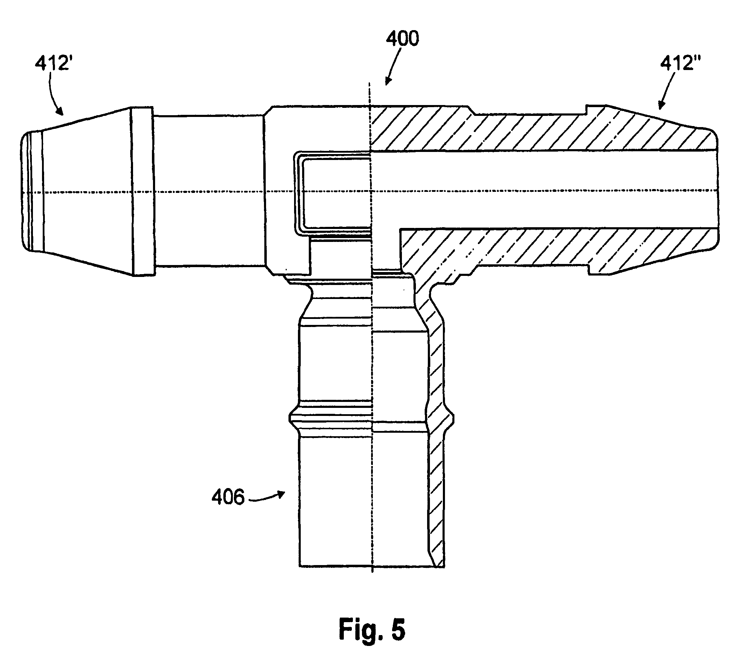

Die in Figur 5 dargestellte dritte Ausführungsform umfasst eine T-förmig ausgebildete Kupplung 400 mit zwei Steckelementen 412', 412" und einer Aufnahme 406. Dabei sind sowohl die Aufnahme 406, als auch die Steckelemente 412', 412" genauso ausgeführt, wie die Aufnahme 106 und das Steckelement 112 der in den Figuren 1 und 2 dargestellten ersten Ausführungsform. Wie auch bei den anderen Ausführungsformen, kann bei dieser Kupplung 400 das Steckelement 412', 412" wahlweise mit einer analog zur Aufnahme 406 ausgebildeten Aufnahme oder mit einem entsprechenden Schlauchende beaufschlagt werden. In die Aufnahme 406 kann ein entsprechend dem Steckelement 412' ausgebildetes Steckelement eingesteckt werden. Aus Gründen der Übersichtlichkeit ist das entsprechende Gegenstück hier nicht dargestellt.

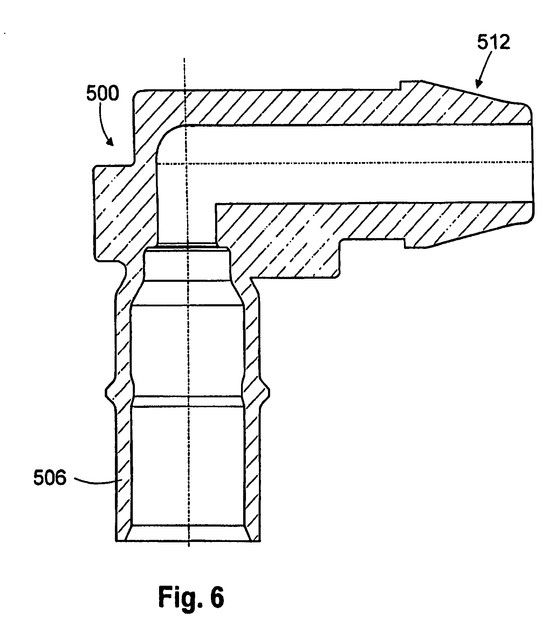

In der Figur 6 dargestellten vierten Ausführungsform ist eine Kupplung 500 dargestellt, bei der ein Steckelement 512 und eine Aufnahme 506 in einem rechten Winkel zueinander angeordnet sind. Dabei entsprechen auch hier die Aufnahme 506 und das Steckelement 512 der Aufnahme 106 und dem Steckelement 112 gemäß der in den Figuren 1 und 2 dargestellten ersten Ausführungsform. Auch hier wurde aus Gründen der Übersichtlichkeit auf die Darstellung des jeweiligen Gegenstücks verzichtet.

### Bezugszeichenliste:

- 100, 300, 400, 500: Kupplung
- 102, 302: Stecker
- 104: Schlauchadapter
- 106, 306, 406, 506: Aufnahme
- 108, 308: Konnektor
- 110: Schlauchadapter
- 112, 312, 412, 512: Steckelement
- 114, 314: Führungsbund
- 116: Führungsfläche
- 118: Stufe
- 120, 320: Hals
- 122: Zentrierbund
- 124: Anlage
- 126, 326: Anschlag
- 130,: Einführbereich
- 132, 332: Klemmbereich
- 134, 334: Haltebereich
- 136,: Fase
- 140, 340: Klemmbund
- 142,: Verstärkungsring

## Patentansprüche

1. Lösbare Kupplung zur Verbindung zweier Schlauchenden einer wenigstens zwei Schläuche umfassenden, flüssigkeitsführenden Schlauchleitung, mit einem an einem ersten Schlauchende angebrachten Steckelement (112) und mit einer an einem zweiten Schlauchende angebrachten, das Steckelement (112) aufnehmenden, im wesentlichen hohlzylindrisch ausgebildeten Aufnahme (106), wobei das Steckelement (112) außenseitig einen ringförmig umlaufenden, den Außendurchmesser des Steckelementes (112) vergrößernden Führungsbund (114) aufweist, wobei die Aufnahme (106) über einen Klemmbereich (132) mit einem Innendurchmesser kleiner als der Außendurchmesser des Führungsbundes (114) und einen Haltebereich (134) zur dichtenden Aufnahme des Führungsbundes (114) verfügt, und wobei dem Klemmbereich (132) ein zylindrischer Einführbereich (130) mit einem Innendurchmesser größer als der Außendurchmesser des Führungsbundes (114) vorgeschaltet ist,
**dadurch gekennzeichnet,**
**dass** die Aufnahme (106) im Klemmbereich (132) außenseitig einen umlaufenden Verstärkungsring (142) aufweist.

2. Kupplung nach Anspruch 1,
**dadurch gekennzeichnet,**
**dass** sich der Einführbereich (130) über mehr als die Hälfte der Aufnahme (106) erstreckt.

3. Kupplung nach einem der vorangehenden Ansprüche,
**dadurch gekennzeichnet,**
**dass** im Übergang von Einführ- (130) zum Klemmbereich (132) eine definierte Fase (136) ausgebildet ist.

4. Kupplung nach einem der vorangehenden Ansprüche,
**dadurch gekennzeichnet,**
**dass** am Steckelement (112) ein Zentrierbund (122) zur passgenauen Aufnahme eines äußeren Randes des Einführbereiches (130) ausgebildet ist.

5. Kupplung nach einem der vorangehenden Ansprüche,
**dadurch gekennzeichnet,**
**dass** der Führungsbund (114) mittels Presspassung dichtend im Haltebereich (134) gehalten ist.

6. Kupplung nach einem der vorangehenden Ansprüche,
**dadurch gekennzeichnet,**
**dass** der Klemmbereich (132) eine Länge von 0,1 mm bis 2 mm, vorzugsweise 1 mm, aufweist.

7. Kupplung nach Anspruch 1,
**dadurch gekennzeichnet,**
**dass** der Verstärkungsring (142) einstückig an der Aufnahme (106) angeformt ist.

8. Kupplung nach einem der vorangehenden Ansprüche,
**dadurch gekennzeichnet,**
**dass** im Inneren der Aufnahme (106) im Klemmbereich (132) Aufgrund der durch den Verstärkungsring (142) erzeugten Schwindung ein Klemmbund (140) ausgebildet ist.

9. Lösbare Kupplung zur Verbindung zweier Schlauchenden einer wenigstens zwei Schläuche umfassenden, flüssigkeitsführenden Schlauchleitung, mit einem an einem ersten Schlauchende angebrachten Steckelement (112, 312) und mit einer an einem zweiten Schlauchende angebrachten, das Steckelement (112, 312) aufnehmenden, im wesentlichen hohlzylindrisch ausgebildeten, aus Kunststoff hergestellten Aufnahme (106, 306), wobei das Steckelement (112, 312) außenseitig einen ringförmig umlaufenden, den Außendurchmesser des Steckelementes (112, 312) vergrößernden Führungsbund (114, 314) aufweist, und wobei die Aufnahme (106, 306) über einen Klemmbereich (132, 332) mit einem Innendurchmesser kleiner als der Außendurchmesser des Führungsbundes (114,314) verfügt,
**dadurch gekennzeichnet,**
**dass** der Innendurchmesser der Aufnahme (106, 306) im Klemmbereich (132, 332) konstruktiv in etwa gleich dem Außendurchmesser des Führungsbundes (114, 314) gewählt ist, und dass die Aufnahme (106, 306) im Klemmbereich (132, 332) eine erhöhte Wandstärke aufweist, so dass der Innendurchmesser des Klemmbereiches (132, 332) unter Ausnutzung der dem Kunststoff innewohnenden Schwindung nachträglich kleiner als der Außendurchmesser des Führungsbundes (114, 314) wird, so dass sich im Klemmbereich (132, 332) ein Klemmbund (140, 340) ausbildet.

10. Aufnahme nach Anspruch 9,
**dadurch gekennzeichnet,**
**dass** im Klemmbereich (132, 332) eine um 0,5 mm bis 3 mm, vorzugsweise 1,5 mm erhöhte Wandstärke vorgesehen ist.

11. Aufnahme nach einem der Ansprüche 9 oder 10,
**dadurch gekennzeichnet,**
**dass** die Aufnahme (106, 306) aus POM-C gebildet ist.

12. Aufnahme nach einem der Ansprüche 9 bis 11,
**dadurch gekennzeichnet,**
**dass** die erhöhte Wandstärke im Klemmbereich (132, 332) als ein umlaufender Verstärkungsring (142, 342) ausgebildet ist.

## Claims

1. A releasable coupling for connecting two hose ends of a liquid conveying hose line composed of at least two assembled hoses, said coupling having a plug element (112) attached to a first hose end and a plug element (112) receiving receptacle (106) that is configured to be substantially hollow cylindrical and is attached to a second hose end, said plug element (112) comprising on its outer side an annular circumferential guide collar (114) increasing the outer diameter of said plug element (112), said receptacle (106) being provided with a clamping region (132) the inner diameter of which is smaller than the outer diameter of said guide collar (114) and with a retaining region (134) for sealingly receiving said guide collar (114), a cylindrical insertion region (130) the inner diameter of which is larger than the outer diameter of said guide collar (114) being mounted upstream of said clamping region (132),
**characterized in**
**that** said receptacle (106) comprises in said clamping region (132) a circumferential reinforcement ring (142) on the outer side thereof.

2. The coupling as set forth in claim 1,
**characterized in**
**that** the insertion region (130) extends over more than half the receptacle (106).

3. The coupling as set forth in any of the afore mentioned claims,
**characterized in**
**that** a defined chamfer (136) is formed in the transition between the insertion region (130) and the clamping region (132).

4. The coupling as set forth in any of the afore mentioned claims,
**characterized in**
**that** a centering collar (122) is formed on the plug element (112) for registering with and receiving an outer edge of the insertion region (130).

5. The coupling as set forth in any of the afore mentioned claims,
**characterized in**
**that** the guide collar (114) is retained in a press-fit sealing relation in the retaining region (134).

6. The coupling as set forth in any of the afore mentioned claims,
**characterized in**
**that** the clamping region (132) comprises a length of 0.1 mm to 2 mm, preferably of 1 mm.

7. The coupling as set forth in claim 1,
**characterized in**
**that** the reinforcement ring (142) is formed as an integral part of the receptacle (106).

8. The coupling as set forth in any of the afore mentioned claims,
**characterized in**
**that** a clamping collar (140) is formed in the clamping region (132) in the interior of the receptacle (106) as a result of the shrinkage produced by the reinforcement ring (142).

9. A releasable coupling for connecting two hose ends of a liquid conveying hose line composed of at least two assembled hoses, said coupling having a plug element (112, 312) attached to a first hose end and a plug element (112, 312) receiving receptacle (106, 306) made of plastic that is configured to be substantially hollow cylindrical and is attached to a second hose end, said plug element (112, 312) comprising on its outer side an annular circumferential guide collar (114, 314) increasing the outer diameter of the plug element (112, 312), said receptacle (106, 306) being provided with a clamping region (132, 332) the inner diameter of which is smaller than the outer diameter of the guide collar (114, 314),
**characterized in**
**that** the inner diameter of the receptacle (106, 306) in the clamping region (132, 332) is selected to be approximately the same as the outer diameter of the guide collar (114, 314) in terms of construction and that the receptacle (106, 306) comprises in the clamping region (132, 332) an increased wall thickness so that the inner diameter of the clamping region (132, 332) makes use of the shrinkage inherent to the plastic material to later become smaller than the outer diameter of the guide collar (114, 314) so that a clamping collar (140, 340) forms in the clamping region (132, 332).

10. The receptacle as set forth in claim 9,
**characterized in**
**that** the wall thickness in the clamping region (132, 332) is increased by 0.5 mm to 3 mm, preferably by 1.5 mm.

11. The receptacle as set forth in any one of the claims 9 or 10,
**characterized in**
**that** the receptacle (106, 306) is formed from POM-C.

12. The receptacle as set forth in any one of the claims 9 to 11,
**characterized in**
**that** the increased wall thickness in the clamping region (132, 332) is configured to be a circumferential reinforcement ring (142, 342).

## Revendications

1. Coupleur pour la jonction amovible de deux extrémités de tuyau d'une conduite souple de transport de liquide constituée d'au moins deux tuyaux flexibles avec un élément mâle (112) attaché à une première extrémité de tuyau et avec un logement (106) attaché à une deuxième extrémité du tuyau, ledit logement étant conformé sensiblement en forme de cylindre creux et recevant l'élément mâle (112), l'élément mâle (112) comportant sur sa face extérieure une collerette de guidage (114) annulaire périphérique qui augmente le diamètre extérieur de l'élément mâle (112), le logement (106) présentant une zone de serrage (132) de diamètre intérieur inférieur au diamètre extérieur de la collerette de guidage (114) et une zone de retenue (134) destinée à recevoir de manière étanche la collerette de guidage (114), une zone d'insertion (130) cylindrique de diamètre intérieur supérieur au diamètre extérieur de la collerette de guidage (114) étant montée en amont de la zone de serrage (132),
**caractérisé en ce**
**que** le logement (106) comporte sur sa face extérieure dans la zone de serrage (132) une bague de renforcement périphérique (142).

2. Coupleur selon la revendication 1,
**caractérisé en ce**
**que** la zone d'insertion (130) s'étend sur plus de la moitié du logement (106).

3. Coupleur selon l'une quelconque des revendications précédentes,
**caractérisé en ce**
**qu'**un biseau (136) défini est formé dans la zone de transition entre la zone d'insertion (130) et la zone de serrage (132).

4. Coupleur selon l'une quelconque des revendications précédentes,
**caractérisé en ce**
**qu'**une collerette de centrage (122) destinée à recevoir à contact intime un bord extérieur de la zone d'insertion (130) est formée sur l'élément mâle (112).

5. Coupleur selon l'une quelconque des revendications précédentes,
**caractérisé en ce**
**que** la collerette de guidage (114) est retenue de manière étanche dans la zone de retenue (134) par emmanchement à force.

6. Coupleur selon l'une quelconque des revendications précédentes,
**caractérisé en ce**
**que** la zone de serrage (132) est longue de 0,1 mm à 2 mm, de préférence de 1 mm.

7. Coupleur selon la revendication 1,
**caractérisé en ce**
**que** la bague de renforcement (142) est rapportée d'une seule pièce sur le logement (106).

8. Coupleur selon l'une quelconque des revendications précédentes,
**caractérisé en ce**
**qu'**une collerette de serrage (140) est formée au sein du logement (106) dans la zone de serrage (132) par le retrait provoqué par la bague de renforcement (142).

9. Coupleur pour la jonction amovible de deux extrémités de tuyau d'une conduite souple de transport de liquide constituée d'au moins deux tuyaux flexibles avec un élément mâle (112, 312) attaché à une première extrémité de tuyau et avec un logement (106, 306) attaché à une deuxième extrémité du tuyau, ledit logement étant réalisé en matière plastique, conformé sensiblement en forme de cylindre creux et recevant l'élément mâle (112, 312), l'élément mâle (112, 312) comportant sur sa face extérieure une collerette de guidage (114, 314) annulaire périphérique qui augmente le diamètre extérieur de l'élément mâle (112, 312), le logement (106, 306) présentant une zone de serrage (132, 332) de diamètre intérieur inférieur au diamètre extérieur de la collerette de guidage (114, 314),
**caractérisé en ce**
**que**, dans la zone de serrage (132, 332), le diamètre intérieur du logement (106, 306) est environ égal en termes de construction au diamètre extérieur de la collerette de guidage (114, 314) et que le logement (106, 306) présente dans la zone de serrage (132, 332) une épaisseur de paroi plus importante de sorte que, par suite du phénomène de retrait inhérent à la matière plastique, le diamètre intérieur de la zone de serrage (132, 332) est ultérieurement inférieur au diamètre extérieur de la collerette de guidage (114, 314) de sorte qu'une collerette de serrage (140, 340) est formée dans la zone de serrage (132, 332).

10. Logement selon la revendication 9,
**caractérisé en ce**
**que** l'épaisseur prévue pour la paroi dans la zone de serrage (132, 332) est augmentée d'un montant compris entre 0,5 mm et 3 mm, de préférence de 1,5 mm.

11. Logement selon l'une quelconque des revendications 9 ou 10,
**caractérisé en ce**
**que** le logement (106, 306) est réalisé en POM c.

12. Logement selon l'une quelconque des revendications 9 à 11,
**caractérisé en ce**
**que** l'épaisseur de la paroi dans la zone de serrage (132, 332) est augmentée par une bague de renforcement (142, 342) périphérique.
